# EUROPÄISCHE PATENTSCHRIFT

(11) **EP 4 384 716 B1**
(45) Veröffentlichungstag und Bekanntmachung des Hinweises auf die Patenterteilung: **30.04.2025**
(21) Anmeldenummer: 22817993.3
(22) Anmeldetag: 15.11.2022
(51) Int. Cl.: F15B 15/14, F16J 15/56, F16J 15/3232

(54) **GESCHLITZTER FÜHRUNGSRING MIT UMLAUFSCHMIERUNG UND KOLBEN-ZYLINDER-EINHEIT MIT EINEM SOLCHEN**
SLOTTED GUIDE RING WITH RECIRCULATING LUBRICATION AND PISTON-CYLINDER UNIT COMPRISING SAME
BAGUE DE GUIDAGE À FENTE AVEC LUBRIFICATION À RECIRCULATION ET UNITÉ PISTON-CYLINDRE LA COMPRENANT

(30) Priorität: 18.11.2021 DE 102021213007
(43) Veröffentlichungstag der Anmeldung: 19.06.2024
(73) Patentinhaber: Trelleborg Sealing Solutions Germany GmbH, 70565 Stuttgart (DE)
(72) Erfinder: WILKE, Mandy, 71034 Böblingen (DE); JORDAN, Holger, 73765 Neuhausen a.d.F. (DE)
(74) Vertreter: Kohler Schmid Möbus Patentanwälte
(86) Internationale Anmeldenummer: PCT/EP2022/082023
(87) Internationale Veröffentlichungsnummer: WO 2023/088913

(56) Entgegenhaltungen:
- DE-A1- 102011 009 326
- DE-A1- 2 348 739
- DE-A1- 3 731 158
- DE-U- 7 535 535
- US-A- 2 489 715

## Beschreibung

Bei Kolben-Zylinder-Einheiten ist der Kolben (bzw. die Kolbenstange) in der Regel über einen oder mehrere Führungsringe am Zylinder geführt. Die Führungsringe verhindern eine metallische Berührung der beiden Bauteile und übernehmen Radialkräfte und gleichen diese aus. Letzteres ist auch für eine zuverlässige Dichtleistung und Langlebigkeit von zwischen den bewegten Bauteilen eingesetzten Dichtungselementen wesentlich. Die Führungsringe sind in der Regel geschlitzt, um eine vereinfachte Montage der Führungsringe zu ermöglichen.

Die in der Praxis eingesetzten geschlitzten Führungsringe sind in einer Vielzahl von Materialien verfügbar, um anwendungsspezifisch eine möglichst gute Verschleißfestigkeit der Führungsringe zu gewährleisten. So können die Führungsringe durch eine entsprechende Wahl ihres Grundmaterials auf unterschiedliche Betriebszeiten und unterschiedliche im Betriebseinsatz aufzunehmende Radialkräfte ausgelegt werden. Eingesetzt werden hierzu häufig speziell modifizierte thermoplastische Materialien wie beispielsweise Polytetrafluoräthylen (PTFE), Polyamide (PA) oder Polyoxymethylen (POM). Weitere Aspekte, die die Führungsringe erfüllen müssen, sind ein möglichst niedriger Reibungskoeffizient in der Paarung mit dem Material des am Führungsring dynamisch anliegenden Maschinenteils, ein antiadhäsives Verhalten, ein geeigneter Einsatz-Temperaturbereich, ggf. eine chemische Beständigkeit sowie eine möglichst große Alterungsbeständigkeit.

Bei den am Markt verfügbaren Führungsringen kann es aufgrund von Herstellungstoleranzen der Führungsringe selbst, aber auch der relativ zueinander bewegten Maschinenteile, zu Funktionsstörungen, wie beispielsweise einem erhöhten Verschleiß bzw. einem ausgeprägten Slip-Stick-Effekt oder im Extremfall sogar zum Versagen des Führungsrings kommen. Insoweit kommt einer ausreichenden Schmierung des Führungsrings im Bereich seiner Kontaktzone(n) mit dem an dem Führungsring dynamisch anliegenden Maschinenteil eine entscheidende Bedeutung zu.

Aus DE 20 2008 012 376 U1 ist ein profiliertes Führungsband für Kolben-Zylindereinheiten bekannt, das im Betriebseinsatz ringförmig angeordnet ist. Das Führungsband weist eine Führungsseite mit mehreren zueinander parallel verlaufenden Schmiermittelkanälen auf, die bezüglich der Seitenflanken des Führungsbandes bzw. des daraus gebildeten Führungsrings diagonal verlaufend angeordnet sind. Die Schmiermittelkanäle erstrecken sich insoweit teilweise in axialer Richtung von einer Seitenflanke zur anderen und weisen einen erheblichen Längenunterschied auf. Bei diesem Führungsband/-ring kann es im Betriebseinsatz nicht zuletzt aufgrund der unterschiedlichen Länge der Schmiermittelkanäle zu ausgeprägten Temperaturgradienten im Material des Führungsrings sowie damit einhergehenden Formänderungen kommen. Darüber hinaus droht die Verlegung einzelner Schmiermittelkanäle durch im Schmiermittel enthaltene Verunreinigungen, was lokale Schmierprobleme und unerwünschte Stick-Slip-Effekte verursachen und unerwünschte Formänderungen des Führungsrings verstärken kann.

DE 37 31 158 A1 offenbart einen geschlitzten Führungsring für eine Kolben-Zylinder-Einheit, der an seiner Führungsseite zumindest einen Schmiermittelkanal aufweist, der sich in Umfangsrichtung des Führungsrings vom ersten freien Endabschnitt zum zweiten freien Endabschnitt des Führungsrings erstreckt und welcher zum axialen Durchgangsspalt zwischen den beiden Endabschnitten des Führungsrings hin beiderseitig offen ist.

Es ist die Aufgabe der Erfindung, einen Führungsring für eine Kolben-Zylinder-Einheit sowie eine Kolben-Zylinder-Einheit mit zumindest einem solchen Führungsring anzugeben, bei denen die vorgenannten Fertigungstoleranzen weniger ins Gewicht fallen und bei denen eine weiter verbesserte Schmierung und Kühlung der vorgenannten Kontaktzonen des Führungsrings erreicht werden kann.

Die den Führungsring betreffende Aufgabe wird durch einen Führungsring mit den in Anspruch 1 angegebenen Merkmalen gelöst. Die erfindungsgemäße Kolben-Zylinder-Einheit weist die in Anspruch 8 angegebenen Merkmale auf. Bevorzugte Weiterbildungen der Erfindung sind in den Unteransprüchen sowie in der Beschreibung angegeben.

Der erfindungsgemäße Führungsring ist für den Einsatz in einer Kolben-Zylinder-Einheit vorgesehen und besteht teilweise oder vollständig aus einem zähelastisch verformbaren Grundmaterial. Der Führungsring weist eine Führungsseite auf, die in einer zur Zentralachse des Führungsrings radialen Richtung nach innen oder nach außen weist und welche der dynamisch kontaktierenden Anlage und Führung an einem Maschinenteil, insbesondere dem Zylinder der Kolben-Zylinder-Einheit, dient. Der Führungsring umfasst ferner eine Rückseite, die von der Führungsseite in radialer Richtung weg weist und welche dem statisch kontaktierenden Abstützen des Führungsrings an einem anderen Maschinenteil, insbesondere dem Kolben (bzw. einer Kolbenstange) der Kolben-Zylinder-Einheit, dient. Zu beachten ist, dass unter dem Begriff Kolben vorliegend auch eine an sich bekannte Kolbenstange zu verstehen ist. Ein erster und ein zweiter freier Endabschnitt des Führungsrings sind in Umfangsrichtung des Führungsrings unter Ausbildung eines axialen Durchgangsspalts voneinander beabstandet angeordnet. Die Stirnseiten der freien Endabschnitte sind zueinander parallel oder im Wesentlichen parallel verlaufend angeordnet, wobei die beiden Stirnseiten in ihrer Projektion auf die Zentralachse mit der Zentralachse einen spitzen Winkel α mit 15° ≤ α ≤ 75°, insbesondere 25° ≤ α ≤ 60° einschließen.

An der Führungsseite sind darüber hinaus mehrere Ringwülste ausgebildet, die jeweils in einer zur Zentralachse Z des Führungsrings axialen Richtung voneinander beabstandet angeordnet sind. Zwischen jeweils zwei unmittelbar benachbart angeordneten Ringwülsten ist jeweils ein Schmiermittelkanal ausgebildet. Jeder Schmiermittelkanal ist mithin in axialer Richtung beiderseitig durch jeweils einen der Ringwülste begrenzt. Der Führungsring kann insbesondere genau einen, zwei oder genau drei Schmiermittelkanäle aufweisen. Der Führungsring kann auch mehr als drei Schmiermittelkanäle aufweisen. Jeder Schmiermittelkanal erstreckt sich nach der Erfindung in Umfangsrichtung des Führungsrings vom ersten freien Endabschnitt zum zweiten freien Endabschnitt und ist zum Durchgangsspalt des Führungsrings hin beiderseitig offen. Mit anderen Worten mündet jeder Schmiermittelkanal des Führungsrings in den vorgenannten axialen Durchgangsspalt.

Der Führungsring bietet durch seine Ringwülste im Einbauzustand mehrere linien- bzw. ringförmige Lastaufnahmeflächen oder Kontaktzonen für das daran geführte Maschinenteil der Kolben-Zylinder-Einheit. Durch die voneinander beabstandet angeordneten linienförmigen Kontaktzonen des Führungsrings kann eine besonders reibungsarme Führung der beiden Maschinenteile relativ zueinander erreicht werden. Darüber hinaus kann dadurch sowie durch das zähelastische Material des Führungsrings einem unerwünschten Stick-Slip-Verhalten entgegengewirkt werden.

Über jeden Schmiermittelkanal des Führungsrings kann im Betriebseinsatz über die gesamte bzw. im Wesentlichen gesamte Umfangserstreckung des Führungsrings ein verbessertes Schmierverhalten der durch die Ringwülste gebildeten dynamischen Kontaktzonen für das am Führungsring im Gleitspiel-Formschluss anliegend geführte Maschinenteil und damit eine verbesserte Standzeit des Führungsrings erreicht werden. Dadurch, dass der zumindest eine Schmiermittelkanal bzw. jeder Schmiermittelkanal beidenends alleinig zu den Stirnseiten der beiden freien Endabschnitte hin offen ausgeführt ist, ergibt sich im Betriebseinsatz eine unter thermischen Gesichtspunkten besonders gleichmäßige Kühlung und Schmierung des Führungsrings im Bereich der Kontaktzonen der Ringwülste an der Gleitfläche des dynamisch am Führungsring anliegenden Maschinenteils. Darüber hinaus wird auch die Fertigung des Führungsrings vereinfacht.

Die zähelastische Verformbarkeit des Führungsrings ermöglicht im Einbauzustand des Führungsrings eine dynamische Anpassung der Größe der jeweiligen (ringförmigen) Lastaufnahmefläche/Kontaktzone an eine am Führungsring jeweilig angreifende Radialkraft. Die Größe der jeweiligen Kontaktzone des Führungsrings vergrößert sich somit mit einer lokal am Führungsring angreifenden vergrößerten Radialkraft und umgekehrt. Dadurch ergibt sich im Vergleich zu herkömmlichen Führungsringen, bei denen die Größe der Kontaktzone invariant und somit im Wesentlichen unabhängig von der jeweilig angreifenden radial gerichteten Belastung des Führungsrings ist, eine insgesamt abgeflachte Progression der Kontaktpressung (Flächenpressung in N/mm2) zwischen der Gleitfläche des am Führungsring dynamisch entlanggleitenden Maschinenteils und dem Führungsring bei steigender radialer Belastung des Führungsrings. Die erfindungsgemäße Bauart des Führungsrings kann so nicht zu vermeidende Fertigungstoleranzen des Führungsrings selbst als auch der über den Führungsring aneinander abzustützenden Maschinenteile der Kolben-Zylinder-Einheit kompensieren. Darüber hinaus kann der Führungsring im Vergleich zu herkömmlichen Führungsringen gleichen Grundmaterials größeren Radialbelastungen standhalten. Nach der Erfindung weist jeder Schmiermittelkanal in Umfangsrichtung einen wellenförmigen Verlauf auf. Bei dieser Bauart kann ein besonders wirksames Kühlen des Führungsrings und Spülen eines jeden Schmiermittelkanals erreicht werden.

Nach der Erfindung weisen die freien Endabschnitte bevorzugt jeweils einen Strömungstrichter für das Schmiermittel auf, in den jeder der Schmiermittelkanäle des Führungsrings mündet. Jeder dieser Strömungstrichter erweitert sich zum axialen Durchgangsspalt hin. Dadurch kann einerseits eine besonders große Einströmöffnung für die Schmiermittelkanäle bereitgestellt werden. Zum anderen kann im Bereich des jeweiligen Strömungstrichters ein ausreichend großer Staudruck des in den Strömungstrichter strömenden Schmiermittels aufgebaut werden. Dadurch wird gewährleistet, dass das Schmiermittel im Betriebseinsatz - abgeleitet aus der Relativbewegung der beiden Maschinenteile (Kolben/Zylinder) - mit einer für Spülungs-, Schmierungs- und Kühlungszwecke der durch die Ringwülste gebildeten dynamischen Kontaktzonen ausreichend großen Fließgeschwindigkeit in jeden Schmiermittelkanal gepresst wird. Im Schmiermittelkanal enthaltene Verunreinigungen können auf diese Weise im Betriebseinsatz zuverlässig aus dem Schmiermittelkanal entfernt bzw. herausgespült werden.

Nach der Erfindung kann jeder Schmiermittelkanal in Umfangsrichtung einen wellenförmigen Verlauf aufweisen. Bei dieser Bauart kann ein besonders wirksames Kühlen des Führungsrings und Spülen eines jeden Schmiermittelkanals erreicht werden.

Jeder Schmiermittelkanal kann an zumindest einer Umfangsposition des Führungsrings eine statische Verengung oder eine dynamische Verengung seines Strömungsquerschnitts aufweisen. Eine statische Verengung liegt dann vor, wenn diese einen im Betrieb des Führungsrings unveränderlichen durchströmbaren Querschnitt aufweist. Der Schmiermittelkanal weist im Bereich einer dynamischen Verengung demgegenüber in Abhängigkeit vom Schmiermitteldruck bzw. -volumenstrom innerhalb des Schmiermittelkanals einen variablen durchströmbaren Querschnitt auf. Dies kann beispielsweise durch ein in sich flexibel verformbares bzw. ein flexibel am Führungsring angelenktes (durch das Schmiermittel anströmbare) Anströmelement realisiert werden. Das Anströmelement kann beispielsweise in Form einer elastisch verformbaren Zunge ausgeführt sein, die mit dem übrigen Führungsring einstückig ausgeführt ist und welche in den Schmiermittelkanal hineinragt. Die Zunge ist vorzugsweise in Umfangsrichtung des Führungsrings bidirektional auslenkbar/verformbar. Alternativ kann das Anströmelement auch eine Kugel oder dergl. sein, die in den Schmiermittelkanal hineinragt und welche gegen die Kraft eines Federelements bzw. des Materials des Führungsrings in einer axialen oder in einer radialen Richtung aus dem Schmiermittelkanal (zumindest teilweise) herausbewegbar ist.

Der Führungsring bietet durch seine führungsseitig angeordneten Ringwülste im Einbauzustand mehrere linien- bzw. ringförmige Lastaufnahmeflächen oder Kontaktzonen für das daran geführte Maschinenteil der Kolben-Zylinder-Einheit. Durch die voneinander beabstandet angeordneten linienförmigen Lastaufnahmeflächen des Führungsrings kann eine besonders reibungsarme Führung der beiden Maschinenteile relativ zueinander erreicht werden. Darüber hinaus kann dadurch sowie durch das zähelastische Material des Führungsrings einem unerwünschten Stick-Slip-Verhalten entgegengewirkt werden.

Jeder der Ringwülste weist nach der Erfindung vorzugsweise einen Scheitel mit Seitenflanken auf, die beiderseitig des Scheitels in einer - bezogen auf die Zentralachse des Führungsrings - radialen Richtung abfallen.

Die Ringwülste des Führungsrings sind nach einer bevorzugten Ausführungsform der Erfindung im unbelasteten Querschnitt des Führungsrings jeweils in radialer Richtung nach außen konvex gewölbt ausgeführt. Dadurch kann der Führungsring auch große und größte Lagerkräfte aufnehmen. Die Radialvorsprünge können dabei insbesondere (im unbelasteten Querschnitt des Führungsrings) eine Wölbungskrümmung aufweisen, die zumindest abschnittsweise oder auch im Wesentlichen eine Kreislinie ist.

Die Rückseite des Führungsrings kann im unbelasteten Querschnitt des Führungsrings zylindrisch ausgeführt sein. Dadurch kann sich der Führungsring vollflächig an einem zylindrisch ausgeformten Nutgrund einer Haltenut eines Maschinenteils abstützen.

Nach einer alternativen Ausführungsform kann die Rückseite im Querschnitt des unbelasteten oder auch des eingebauten Führungsrings wellen- oder zickzackförmig ausgeführt sein, d. h., mehrere Radialvorsprünge aufweisen. Diese Radialvorsprünge erstrecken sich vorzugsweise in einer zu den Ringwülsten korrespondierenden Weise in Umfangsrichtung des Führungsrings jeweils über die gesamte oder im Wesentlichen über die gesamte Umfangserstreckung des Führungsrings.

Zu beachten ist, dass die Ringwülste und die Radialvorsprünge im Querschnitt des Führungsrings in radialer Richtung zueinander fluchtend angeordnet sein können. Dadurch kann das Ansprechverhalten des Führungsrings auf sich ändernde radiale Belastung des Führungsrings durch die geometrische Ausgestaltung der Radialvorsprünge auf einfache Weise eingestellt werden. Darüber hinaus kann ein und derselbe Führungsring als sogenannte Stangen- oder Kolbenstangenführungsring oder auch als ein Kolbenring eingesetzt werden. Im erstgenannten Fall ist der Führungsring in der Haltenut des Zylinders oder Gehäuses der (Kolben-)Stange und in letztgenanntem Fall ist der Führungsring in der Haltenut des Kolbens angeordnet. Die Einsatzbreite des Führungsrings wird dadurch verbessert und Vorhaltungs- bzw. Lagerkosten reduziert. Bevorzugt sind die Ringwülste und die Radialvorsprünge hinsichtlich Größe und Geometrie jeweils baugleich ausgeführt.

Besonders bevorzugt weist der Führungsring beiderseitig in axialer Richtung einen ballig ausgeformten Flankenabschnitt auf. Dadurch kann im Einbauzustand des Führungsrings in einer Haltenut oder dergleichen eine Deformation des Führungsrings in axialer Richtung erleichtert werden. Auch kann dadurch einem unerwünschten Verkanten des Führungsrings bei dessen Montage auf einfache Weise entgegengewirkt werden.

Das Grundmaterial des Führungsrings kann nach der Erfindung insbesondere ein Duroplast oder auch ein Thermoplast sein. Eingesetzt werden können insbesondere speziell modifizierte thermoplastische Materialien, wie beispielsweise Polytetrafluoräthylen (PTFE), Polyamide (PA) oder Polyoxymethylen (POM).

Der Führungsring kann nach der Erfindung in einer Mehrkomponentenbauweise ausgeführt sein. So kann der Führungsring insbesondere eine an sich bekannte Stütz- oder Armierungseinlage, vorzugsweise aus Metall oder aus einer technischen Keramik, aufweisen. Dies ist für die Einsatzbreite des Führungsrings vorteilhaft.

Nach der Erfindung können die Ringwülste im Vergleich zum Grundmaterial des Führungsrings bzw. zum übrigen Führungsring ein härteres Material mit einem vorzugsweise kleineren Reibungskoeffizienten umfassen.

Die erfindungsgemäße Kolben-Zylinder-Einheit umfasst ein erstes Maschinenteil in Form eines Kolbens bzw. einer Kolbenstange und ein zweites Maschinenteil in Form eines Zylinders, in dem das erste Maschineteil entlang einer Bewegungsachse hin- und her bewegbar geführt ist. In einer Haltenut eines der beiden Maschinenteile ist zumindest ein Führungsring gemäß den vorstehenden Ausführungen angeordnet. Über diesen Führungsring ist der Kolben unter Ausbildung eines zwischen Kolben und Zylinder ausgebildeten Lagerspalts im Gleitspiel-Formschluss am Zylinder abgestützt und geführt. Dies derart, dass ein im Lagerspalt angeordnetes Schmiermittel bei einer Vorhubbewegung des ersten Maschinenteils über einen der beiden freien Endabschnitte des Führungsrings und bei einer Rückhubbewegung des ersten Maschinenteils über den jeweilig anderen der beiden freien Endabschnitte des Führungsrings in den zumindest einen Schmiermittelkanal des Führungsrings strömt. Das Schmiermittel wird also - abgeleitet aus der axialen Relativbewegung der beiden Maschinenteile - in den zumindest einen Schmiermittelkanal des Führungsrings eingetragen und strömend durch diesen hindurchgeführt.

Die Kolben-Zylinder-Einheit kann für pneumatische oder hydraulische Anwendungen eingesetzt werden.

Weist der zumindest eine Schmiermittelkanal eine dynamische Verengung auf, so ist bei Erreichen oder Überschreiten eines definierten Staudrucks des Schmiermittels in dem zumindest einen Strömungskanal eine medienbetätigte Deaktivierung der dynamischen Verengung des Strömungsquerschnitts des zumindest einen Schmiermittelkanals bewirkt. Durch die Verengung kann innerhalb des Schmiermittelkanals eine turbulente Strömung erreicht werden, durch die eine besonders effiziente Durchmischung des Schmiermittels sowie ein verbesserter Austrag von in den Schmiermittelkanal eingetragenen Verunreinigungen möglich ist.

Der Führungsring ist bezüglich der Bewegungsachse vorzugsweise mit einer axialen Luft in der Haltenut angeordnet. Dadurch kann eine vereinfachte Montage und ein wenig störanfälliger Betrieb der Kolben-Zylindereinheit gewährleistet werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: eine erfindungsgemäße Kolben-Zylinder-Einheit mit einem Führungsring in einer ausschnittsweisen Schnittdarstellung;
- Fign. 2A,2b: einen nicht erfindungsgemäßen Führungsring in einer freigestellten perspektivischen Detailansicht (Fig. 2A) und im Querschnitt (Fig. 2B);
- Fig. 3: einen weiteren, nicht erfindungsgemäßen Führungsring mit einem Schmiermittelkanal und mit endabschnittseitig ausgebildeten Strömungstrichtern, in die der Schmiermittelkanal beidenends mündet, in einem Detailausschnitt;
- Fig. 4: einen weiteren, nicht erfindungsgemäßen Führungsring mit zwei Schmiermittelkanälen, die streng in Umfangsrichtung des Führungsrings verlaufend angeordnet sind, in einem ausschnittsweisen Querschnitt;
- Fig. 5: einen weiteren Führungsring mit rückseitigen Radialvorsprüngen in einem ausschnittsweisen Querschnitt;
- Fig. 6: einen erfindungsgemäßen Führungsring mit einem in Umfangsrichtung wellenförmig verlaufenden Schmiermittelkanal mit konstantem Strömungsquerschnitt;
- Fig. 7: einen nicht erfindungsgemäßen Führungsring mit einem in Umfangsrichtung inkonstanten Strömungsquerschnittsverlauf; und

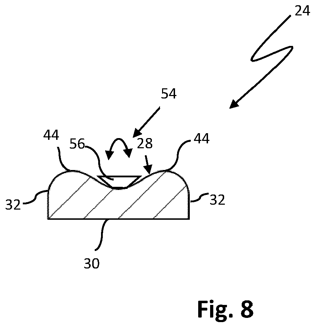

- Fig. 8: einen Führungsring mit einem in den Schmiermittelkanal hineinragenden Anströmelement, durch das eine in Abhängigkeit von der Schmiermittelströmung variable Verengung des Schmiermittelkanals bewirkt ist, wobei das Anströmelement aus einer gezeigten Neutralposition in Umfangsrichtung des Führungsrings bidirektional flexibel auslenkbar ist.

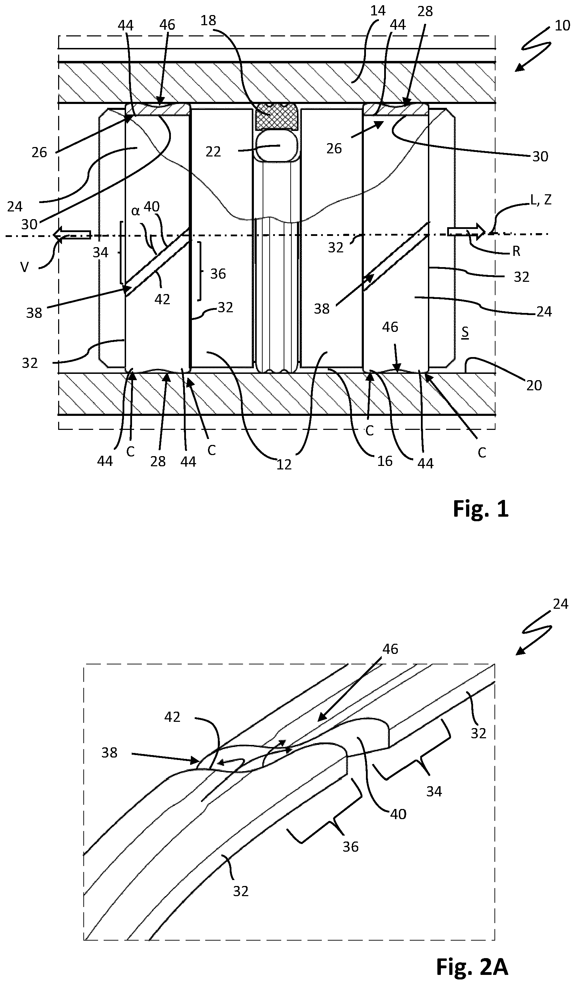

In **Fig. 1** ist eine Kolben-Zylinder-Einheit **10** in einer ausschnittsweisen Schnittansicht gezeigt. Die Kolben-Zylinder Einheit 10 weist ein erstes Maschinenteil **12** in Form eines Kolbens und ein zweites Maschinenteil **14** in Form eines Zylinders auf. Der Kolben 12 ist im Zylinder 14 entlang einer Bewegungsachse **L** hin- und herbewegbar geführt. Zu beachten ist, dass unter dem Begriff Kolben vorliegend auch eine an sich bekannte Kolbenstange zu verstehen ist.

Zur fluid- bzw. druckdichten Abdichtung eines zwischen dem Kolben und dem Zylinder ausgebildeten Lagerspalts **16** dient hier ein Dichtring **18.** Der Dichtring 18 liegt an einer durch die Innenwandung des Zylinders gebildeten Gleitfläche **20** des Zylinders dynamisch dichtend an. Der Dichtring 18 kann mit einem Vorspannelement **22** versehen sein. Das erste Maschinenteil 12 ist hier mit zwei Führungsringen **24** versehen, über die das erste Maschinenteil 12 an der Gleitfläche 20 des zweiten Maschinenteils 14 geführt ist.

Die beiden in Fig. 1 gezeigten Führungsringe 24 sind jeweils in einer umlaufenden Haltenut **26** des ersten Maschinenteils 12 angeordnet. Jeder Führungsring 24 weist eine dynamisch führende Vorder- oder Führungsseite **28** und eine Rückseite **30** auf, die über Seitenflanken **32** des Führungsrings 24 miteinander verbunden sind. Die Führungsseite 28 dient der dynamisch kontaktierenden Anlage des jeweiligen Führungsrings 24 am Zylinder 14. Dementsprechend weist die Führungsseite 28 hier in einer zur Zentralachse Z des Führungsrings 24 radialen Richtung nach außen. Die Zentralachse Z des Führungsrings 24 fällt im Montagezustand des Führungsrings 24 mit der Bewegungsachse L der Kolben- Zylinder-Einheit 10 (vgl. z.B. Fig. 1) zusammen oder im Wesentlichen zusammen. Die Kontaktzonen eines jeden Führungsrings 24 mit der Gleitfläche 20 sind mit **C** bezeichnet.

Die Rückseite 30 des jeweiligen Führungsrings 24 dient einem statisch kontaktierenden Abstützen des Führungsrings 28 am Nutgrund des die Haltenut 26 aufweisenden Maschinenteils 12, 14, hier beispielsweise des in Fig. 1 gezeigten Kolbens 12.

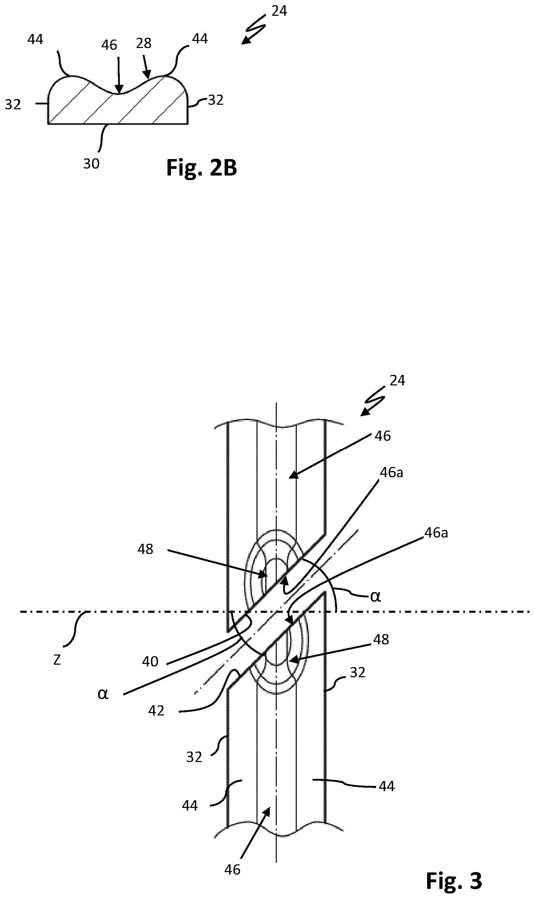

In **Fig. 2** ist der Führungsring 24 in einem freigestellten perspektivischen Detailausschnitt gezeigt. Der Führungsring 24 ist geschlitzt ausgeführt. Dementsprechend weist der Führungsring 24 in Umfangsrichtung einen ersten und einen zweiten Endabschnitt **34, 36** auf, die voneinander unter Ausbildung eines axialen Durchgangsspalts **38** voneinander beabstandet angeordnet sind. Durch die geschlitzte Form des Führungsrings 24 wird dessen Montage vereinfacht. Die beiden Endabschnitte 34, 36 weisen einander zuweisende Stirnseiten **40, 42** auf, die zueinander parallel oder im Wesentlichen zueinander parallel verlaufend angeordnet sind. Die Stirnseiten 40, 42 schließen in ihrer Projektion auf die Zentralachse Z mit der Zentralachse Z (vgl. Fig. 1) jeweils einen spitzen Winkel **α** mit 15° ≤ α ≤ 75° ein. Der Winkel α kann gemäß Fig. 1 insbesondere 40° betragen.

Im Betriebseinsatz der Kolben-Zylinder-Einheit 10 muss jeder Führungsring 24 mitunter hohe radiale Belastungen aufnehmen und ist nicht zuletzt aufgrund von reibungsbedingten mechanischen und thermischen Belastungen zwangsläufig einem Verschleiß unterworfen. Aufgrund von Herstellungstoleranzen von herkömmlichen Führungsringen selbst, aber auch der relativ zueinander bewegten Maschinenteile, kann es dabei zu Funktionsstörungen, wie beispielsweise einem erhöhten Verschleiß, einem unerwünschten Slip-Stick-Effekt oder im Extremfall sogar zu einem vorzeitigen Versagen der herkömmlichen Führungsringe kommen. Jeder Führungsring 24 weist deshalb mehrere an/auf seiner Führungsseite 28 ausgebildete Ringwülste **44** auf, die jeweils in einer zur Zentralachse Z des Führungsrings 24 axialen Richtung voneinander beabstandet angeordnet sind. Durch die Ringwülste 44 ist ein Schmiermittelkanal **46** in axialer Richtung beiderseitig begrenzt. Der Schmiermittelkanal 46 erstreckt sich in Umfangsrichtung des Führungsrings 24 vom ersten freien Endabschnitt 34 zum zweiten freien Endabschnitt 36 und ist zum axialen Durchgangsspalt 38 hin beiderseitig offen. Der Schmiermittelkanal 46 ist mithin beidenends mit dem axialen Durchgangsspalt 38 fluidisch verbunden.

Ein im Lager bzw. Dichtspalt 16 angeordnetes Schmiermittel S wird so bei einer Vorhubbewegung **V** des ersten Maschinenteils 12 und bei einer Rückhubbewegung **R** des ersten Maschinenteils 12 wechselweise über jeweils denjenigen freien Endabschnitt 34, 36 des Führungsrings 24 in den Schmiermittelkanal 46 eingeschleppt bzw. gepresst, dessen Stirnseite 40, 42 der jeweiligen Bewegungsrichtung des ersten Maschinenteils 12 in axialer Richtung entgegengerichtet ist.

Im Betriebseinsatz der Kolben-Zylinder-Einheit 10 kann auf diese Weise ein gezieltes Durchströmen des Schmiermittelkanals 46 mit dem Schmiermittel **S** gewährleistet und so die Schmierung und Kühlung der Kontaktzone C des Führungsrings 24 an der Gleitfläche 20 des zweiten Maschinenteils 14 verbessert werden. Insgesamt kann dadurch einem vorzeitigen Verschleiß des Führungsrings 24 sowie einem unerwünschten Stick-Slip zuverlässig entgegengewirkt werden.

Gemäß **Fig. 3** kann sich ein jeder Schmiermittelkanal 46 des Führungsrings 24 zur Stirnseite 40, 42 des jeweiligen Endabschnitts 34, 36 hin erweitern und so einen Strömungstrichter **48** bilden bzw. in einen Strömungstrichter 48 der Endabschnitte 34, 36 münden. Dadurch kann einerseits eine besonders große Einströmöffnung **46a** für jeden der Schmiermittelkanäle 46 bereitgestellt werden. Zum anderen kann dadurch bei einer Vorhubbewegung V sowie auch bei einer Rückhubbewegung R des Kolbens (Fig. 1) ein Staudruck des in den jeweiligen Strömungstrichter 48 einströmenden Schmiermittels aufgebaut werden. Dadurch wird gewährleistet, dass das Schmiermittel S im Betriebseinsatz - abgeleitet aus der Relativbewegung der beiden Maschinenteile 12, 14 - mit einer für Spülungs-, Schmierungs- und Kühlungszwecke ausreichend großen Fließgeschwindigkeit in jeden Schmiermittelkanal 46 gepresst wird. Im Schmiermittel S enthaltene partikuläre Verunreinigungen (in der Zeichnung nicht gezeigt), die in den zumindest einen Schmiermittelkanal 46 des Führungsrings 24 eintreten, können auf diese Weise im Betriebseinsatz zuverlässig aus dem Schmiermittelkanal 46 entfernt bzw. aus diesem herausgespült werden.

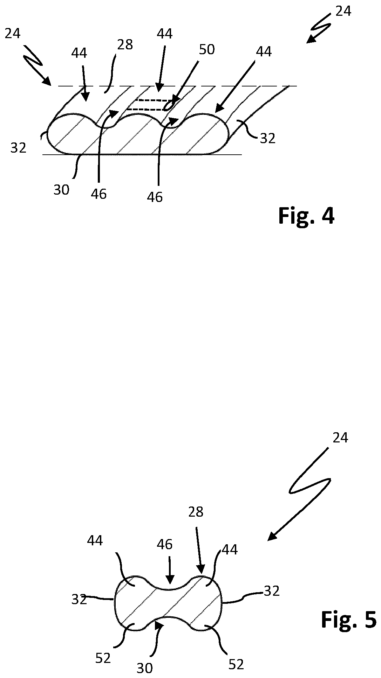

Der Führungsring kann gemäß **Fig. 4** an seiner Führungsseite 28 auch mehr als zwei, insbesondere drei Ringwülste 44 aufweisen. Jeweils zwei der Ringwülste 44 begrenzen zwischen einander paarweise einen Schmiermittelkanal 46. Die beiden Schmiermittelkanäle 46 bilden an jedem der beiden Endabschnitte 34, 36 des Führungsrings 24 vorzugsweise gemeinsam einen der im Zusammenhang mit Fig. 3 erläuterten Strömungstrichter aus bzw. münden in einen solchen. Zu beachten ist, dass die Schmiermittelkanäle 46 untereinander durch einen oder durch mehrere axiale Verbindungskanäle **50** fluidisch verbunden sein können.

Der Führungsring 24 kann gemäß der in **Fig. 5** gezeigten Schnittdarstellung auch eine in axialer Richtung gewellte Rückseite 30 mit Radialvorsprüngen **52** aufweisen. Bei dieser Bauweise können Fertigungstoleranzen sowohl der beiden Maschinenteile als auch des Führungsrings 24 besonders wirksam kompensiert werden. Die ruckseitigen Radialvorsprünge 52 des Führungsrings 24 können in radialer Richtung zu den Ringwülsten 44 der Vorderseite des Führungsrings fluchtend angeordnet sein. Auch können Sie in ihrer Geometrie und Größe mit den Ringwülsten 44 übereinstimmen.

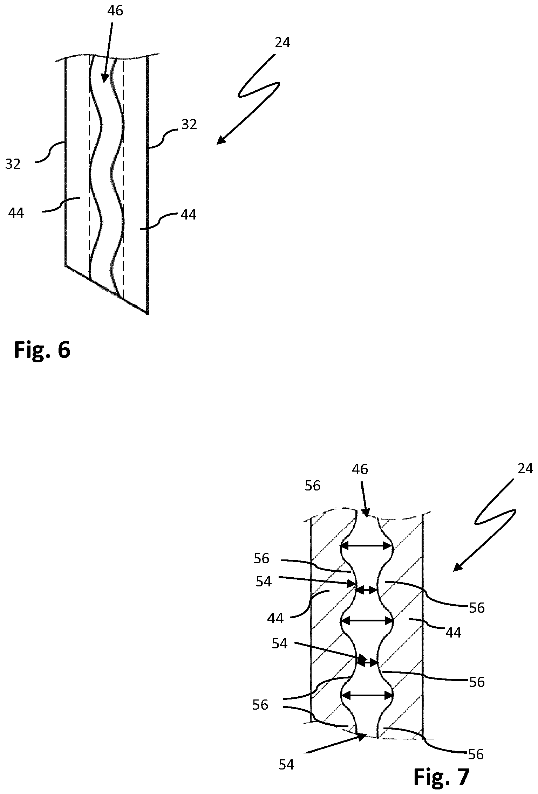

Gemäß dem in **Fig. 6** gezeigten Ausführungsbeispiel des Führungsrings 24 kann der Schmiermittelkanal 46 in Umfangsrichtung einen, insbesondere gleichförmig, wellenförmigen Verlauf aufweisen. Bei dieser Bauart zeigt sich eine besonders effiziente Schmierung der Kontaktzone C der Ringwülste 44 mit der zugeordneten Gleitfläche 20 des Zylinders 12.

Gemäß **Fig. 7** kann jeder Schmiermittelkanal 46 des Führungsrings 24 eine oder mehrere statische und/oder dynamisch veränderliche Verengungen **54** (seines vom Schmiermittel durchströmbaren freien Querschnitts) aufweisen. Jede Verengung 54 kann insbesondere durch ein Anströmelement **56,** etwa in Form eines Wandvorsprungs oder mehrerer Wandvorsprünge gebildet sein, wie dies in Fig. 7 gezeigt ist. Im Fall einer dynamisch veränderlichen Verengung 54 kann das Anströmelement 56 beispielsweise in sich flexibel verformbar sein bzw. flexibel auslenkbar am Führungsring angeordnet sein. Dadurch kann das Anströmelement 56 - schmiermittelbetätigt - in Richtung der Zentralachse Z des Führungsrings 24 ausgelenkt werden. Durch derlei Verengungen 54 kann innerhalb des Schmiermittelkanals 46 ein Staudruck des Schmiermittels erzeugt und so die Schmierung lokal dem Bedarf entsprechend eingestellt werden.

Die Ringwülste 44 und/oder die rückseitigen Radialvorsprünge 52 des Führungsrings 24 können ein Material aufweisen, das im Vergleich zum Material des übrigen Führungsrings 24 ein kleineres E-Modul bzw. einen kleineren Reibungskoeffizienten aufweist.

Der Führungsring 24 kann zumindest teilweise oder auch gänzlich aus einem Elastomer, etwa einem Ethylen-Propyläen-Dien-Kautschuk (= EPDM) oder einem Fluorkautschuk (= FKM) sowie dem Fachmann geläufige Zuschlagstoffe bestehen. Auch PA (Polyamid) oder hochtemperaturbeständige Thermoplaste, wie etwa PEEK (=Polyetheretherketon) sind geeignet. Es versteht sich, dass der Führungsring 24 eine an sich bekannte Armierungs- oder Stützeinlage, etwa in Form eines Stützrings, aufweisen kann. Die Armierungs- bzw. Stützeinlage kann insbesondere aus Metall, einer technischen Keramik oder auch aus einem, z. B. kohlenfaserhaltigen, Verbundwerkstoff bestehen. Auch kann der Führungsring in einer Kartusche vormontiert sein und gemeinsam mit dieser in eine Haltenut des Kolbens bzw. des Zylinders eingesetzt sein.

## Patentansprüche

1. Geschlitzter Führungsring (24) für eine Kolben-Zylinder-Einheit (10), der teilweise oder vollständig aus einem zähelastisch verformbaren Grundmaterial besteht,
- mit einer Führungsseite (28), die in einer zu Zentralachse Z des Führungsrings (24) radialen Richtung nach innen oder nach außen weist und welche der dynamisch kontaktierenden Anlage an einem Maschinenteil (12, 14) dient, und
- mit einer Rückseite (30), die von der Führungsseite (28) in radialer Richtung weg weist und welche dem statisch kontaktierenden Abstützen des Führungsrings (24) dient,
- mit einem ersten freien Endabschnitt (34) und mit einem zweiten freien Endabschnitt (36), die in Umfangsrichtung des Führungsrings unter Ausbildung eines axialen Durchgangsspalts (38) voneinander beabstandet angeordnet sind und deren Stirnseiten (40, 42) zueinander parallel oder im Wesentlichen zueinander parallel verlaufend angeordnet sind,
wobei die Stirnseiten (40, 42) in ihrer Projektion auf die Zentralachse Z mit der Zentralachse Z einen spitzen Winkel α mit 15° ≤ α ≤ 75° einschließen;
- mit mehreren an der Führungsseite (28) ausgebildeten Ringwülsten (44), die jeweils in einer zur Zentralachse Z des Führungsrings (24) axialen Richtung voneinander beabstandet angeordnet sind,
- mit zumindest einem Schmiermittelkanal (46), der in axialer Richtung beiderseitig durch jeweils zwei der Ringwülste (44) begrenzt ist,
wobei sich der Schmiermittelkanal (46) in Umfangsrichtung des Führungsrings (24) vom ersten freien Endabschnitt (34) zum zweiten freien Endabschnitt (36) erstreckt und zum axialen Durchgangsspalt (38) hin beiderseitig offen ist,
**dadurch gekennzeichnet, dass**
der zumindest eine Schmiermittelkanal (46) in Umfangsrichtung einen wellenförmigen Verlauf aufweist.

2. Führungsring (24) gemäß Anspruch 1, **dadurch gekennzeichnet, dass** die beiden freien Endabschnitte (34, 36) jeweils einen Strömungstrichter (48) aufweisen, in den jeder der Schmiermittelkanäle (46) mündet.

3. Führungsring (24) gemäß einem der vorhergehenden Ansprüche, **dadurch gekennzeichnet, dass** der zumindest eine Schmiermittelkanal (46) an zumindest einer Umfangsposition des Führungsrings (24) eine statische oder eine dynamische Verengung (54) aufweist.

4. Führungsring (24) gemäß einem der vorhergehenden Ansprüche, **dadurch gekennzeichnet, dass** die Rückseite (30) im Querschnitt des unbelasteten Führungsrings (24) wellen- oder zickzackförmig ausgeführt ist und mehrere Radialvorsprünge (52) aufweist, die sich in Umfangsrichtung des Führungsrings (24) jeweils über die gesamte oder im Wesentlichen gesamte Umfangserstreckung des Führungsrings (24) erstrecken.

5. Führungsring (24) gemäß Anspruch 4, **dadurch gekennzeichnet, dass** die Ringwülste (44) und die Radialvorsprünge (52) in einer radialen Richtung zueinander fluchtend angeordnet sind.

6. Führungsring (24) gemäß einem der vorhergehenden Ansprüche, **dadurch gekennzeichnet, dass** die Ringwülste (44) im Vergleich zum Grundmaterial des Führungsrings (24) ein härteres Material mit einem vorzugsweise kleineren Reibungskoeffizienten umfassen.

7. Kolben-Zylinder-Einheit (10), umfassend
- ein erstes Maschinenteil (12) in Form einer Kolbenstange oder eines Kolbens;
- ein zweites Maschinenteil (14) in Form eines Zylinders, in dem das erste Maschineteil (12) entlang einer Bewegungsachse (L) hin- und her bewegbar geführt ist;
- zumindest einen Führungsring (24) gemäß einem der vorhergehenden Ansprüche 1 bis 6, der in einer Haltenut (26) eines der beiden Maschinenteile (12, 14) angeordnet ist und über das das jeweilig andere Maschinenteil (12, 14) unter Ausbildung eines zwischen den beiden Maschinenteilen (12, 14) ausgebildeten Lagerspalts (16) im Gleitspiel-Formschluss abgestützt und geführt ist, derart, dass ein im Lagerspalt (16) angeordnetes Schmiermittel S bei einer Vorhubbewegung V des ersten Maschinenteils (12) über den einen der freien Endabschnitte (34, 36) des Führungsrings (24) und bei einer Rückhubbewegung des ersten Maschinenteils (12) über den jeweilig anderen der beiden Endabschnitte (34, 36) des Führungsrings (24) in den zumindest einen Schmiermittelkanal (46) des Führungsrings (24) strömt .

8. Kolben-Zylindereinheit (10) gemäß Anspruch 7, wenn Anspruch 7 von Anspruch 3 abhängt, **dadurch gekennzeichnet, dass** die dynamische Verengung (56) des Schmiermittelkanals 24 im Betriebseinsatz durch das durch den Schmiermittelkanal strömende Schmiermittel verringerbar bzw. deaktivierbar ist.

9. Kolben-Zylinder-Einheit (10) gemäß Anspruch 7 oder 8, **dadurch gekennzeichnet, dass** der Führungsring (24) bezüglich der Bewegungsachse (L) mit axialer Luft in der Haltenut (26) angeordnet ist.

## Claims

1. Slotted guide ring (24) for a piston-cylinder unit (10), which consists partially or completely of a viscoplastically deformable base material,
- with a guide side (28) which points inward or outward in a direction radial to the central axis Z of the guide ring (24) and which is used for dynamically contacting abutment on a machine part (12, 14), and
- with a rear side (30) which points away from the guide side (28) in the radial direction and which serves to support the guide ring (24) in a statically contacting manner,
- with a first free end portion (34) and with a second free end portion (36), which are at a distance from one another in the circumferential direction of the guide ring, forming an axial passage gap (38), and the end faces (40, 42) of which extend parallel or substantially parallel to one another, the end faces (40, 42) enclosing an acute angle α of 15° ≤ α ≤ 75° with the central axis Z in their projection onto the central axis Z,
- with a plurality of annular beads (44) formed on the guide side (28), which are each arranged at a distance from one another in an axial direction relative to the central axis Z of the guide ring (24),
- with at least one lubricant channel (46) which is delimited on both sides in the axial direction by two of the annular beads (44), the lubricant channel (46) extending in the circumferential direction of the guide ring (24) from the first free end portion (34) to the second free end portion (36) and being open on both sides toward the axial passage gap (38),
**characterized in that**
the at least one lubricant channel (46) has a wavy course in the circumferential direction.

2. Guide ring (24) according to claim 1, **characterized in that** the two free end portions (34, 36) each have a flow funnel (48) into which each of the lubricant channels (46) opens.

3. Guide ring (24) according to one of the preceding claims, **characterized in that** the at least one lubricant channel (46) has a static or dynamic constriction (54) in at least one circumferential position of the guide ring (24).

4. Guide ring (24) according to one of the preceding claims, **characterized in that** the rear side (30) is designed to be wave-shaped or zigzag-shaped in cross section of the unloaded guide ring (24) and has a plurality of radial projections (52) which each extend in the circumferential direction of the guide ring (24) over the entire or substantially the entire circumferential extent of the guide ring (24).

5. Guide ring (24) according to claim 4, **characterized in that** the annular beads (44) and the radial projections (52) are arranged in alignment with one another in a radial direction.

6. Guide ring (24) according to one of the preceding claims, **characterized in that** the annular beads (44) comprise a harder material with a preferably lower coefficient of friction than the base material of the guide ring (24).

7. Piston-cylinder unit (10), comprising
- a first machine part (12) in the form of a piston rod or piston;
- a second machine part (14) in the form of a cylinder, in which the first machine part (12) is guided so that it can be moved back and forth along a movement axis (L);
- at least one guide ring (24) according to one of the preceding claims 1 to 6, which is arranged in a retaining groove (26) of one of the two machine parts (12, 14), and via which the corresponding other machine part (12, 14) is supported and guided, in a form-fitting connection with sliding clearance, by the formation of a bearing gap (16) formed between the two machine parts (12, 14), in such a way that, during a forward stroke movement V of the first machine part (12), a lubricant S arranged in the bearing gap (16) flows via one of the free end portions (34, 36) of the guide ring (24) and, during a return stroke movement of the first machine part (12), via the corresponding other of the two end portions (34, 36) of the guide ring (24) into the at least one lubricant channel (46) of the guide ring (24).

8. Piston-cylinder unit (10) according to claim 7, if claim 7 is dependent on claim 3, **characterized in that** the dynamic constriction (56) of the lubricant channel (24) can be reduced or deactivated during operation by the lubricant flowing through the lubricant channel.

9. Piston-cylinder unit (10) according to claim 7 or 8, **characterized in that** the guide ring (24) is arranged with axial clearance in the retaining groove (26) with respect to the movement axis (L).

## Revendications

1. Bague de guidage fendue (24) pour une unité piston-cylindre (10), constituée partiellement ou entièrement d'un matériau de base déformable de manière viscoélastique,
- avec une face de guidage (28) qui est dirigée vers l'intérieur ou vers l'extérieur dans une direction radiale par rapport à l'axe central Z de la bague de guidage (24) et qui sert à l'installation avec mise en contact dynamique au niveau d'une pièce de machine (12, 14), et
- avec une face arrière (30) qui se détourne de la face de guidage (28) dans la direction radiale et qui sert au soutien avec mise en contact statique de la bague de guidage (24),
- avec une première section d'extrémité libre (34) et une deuxième section d'extrémité libre (36) qui sont agencées de manière espacée l'une de l'autre dans la direction circonférentielle de la bague de guidage en formant un interstice de passage (38) axial et dont les faces avant (40, 42) sont agencées parallèlement l'une à l'autre ou de manière essentiellement parallèle l'une à l'autre,
les faces avant (40, 42) faisant avec l'axe central Z un angle aigu a compris entre 15° et 75° lorsqu'elles sont projetées sur l'axe central Z ;
- avec plusieurs bourrelets annulaires (44) formés au niveau de la face de guidage (28) et respectivement agencés de manière espacée les uns des autres dans une direction axiale par rapport à l'axe central Z de la bague de guidage (24),
- avec au moins un canal de lubrifiant (46) qui est délimité des deux côtés dans la direction axiale par respectivement deux des bourrelets annulaires (44),
le canal de lubrifiant (46) s'étendant dans la direction circonférentielle de la bague de guidage (24) depuis la première section d'extrémité libre (34) jusqu'à la deuxième section d'extrémité libre (36) et étant ouvert des deux côtés par rapport à l'interstice de passage axial (38),
**caractérisée en ce que**
le au moins un canal de lubrifiant (46) présente une forme ondulée dans la direction circonférentielle.

2. Bague de guidage (24) selon la revendication 1, **caractérisée en ce que** les deux sections d'extrémité libres (34, 36) présentent respectivement un entonnoir d'écoulement (48) dans lequel débouche chacun des canaux de lubrifiant (46).

3. Bague de guidage (24) selon l'une quelconque des revendications précédentes, **caractérisée en ce que** le au moins un canal de lubrifiant (46) présente un rétrécissement statique ou dynamique (54) au niveau d'au moins une position circonférentielle de la bague de guidage (24).

4. Bague de guidage (24) selon l'une quelconque des revendications précédentes, **caractérisée en ce que** la face arrière (30) présente une forme ondulée ou en zigzag en coupe transversale de la bague de guidage (24) non sollicitée et présente plusieurs saillies radiales (52) qui s'étendent dans la direction circonférentielle de la bague de guidage (24) respectivement sur la totalité ou essentiellement la totalité de l'extension circonférentielle de la bague de guidage (24).

5. Bague de guidage (24) selon la revendication 4, **caractérisée en ce que** les bourrelets annulaires (44) et les saillies radiales (52) sont agencés de manière alignée les uns par rapport aux autres dans une direction radiale.

6. Bague de guidage (24) selon l'une quelconque des revendications précédentes, **caractérisée en ce que** les bourrelets annulaires (44) comprennent un matériau plus dur avec un coefficient de frottement de manière préférée plus faible que le matériau de base de la bague de guidage (24).

7. Unité piston-cylindre (10), comprenant
- une première pièce de machine (12) sous la forme d'une tige de piston ou d'un piston ;
- une deuxième pièce de machine (14) sous la forme d'un cylindre, au sein de laquelle la première pièce de machine (12) est guidée de manière à pouvoir effectuer un mouvement de va-et-vient le long d'un axe de déplacement (L) ;
- au moins une bague de guidage (24) selon l'une quelconque des revendications précédentes 1 à 6, qui est agencée dans une rainure de retenue (26) de l'une des deux pièces de machine (12, 14) et par l'intermédiaire de laquelle la respectivement autre pièce de machine (12, 14) est soutenue et guidée avec constitution d'un interstice de palier (16) formé entre les deux pièces de machine (12, 14) avec verrouillage par complémentarité de forme et jeu de glissement, de telle manière qu'un lubrifiant S placé dans l'interstice de palier (16) s'écoule dans le au moins un canal de lubrifiant (46) de la bague de guidage (24) lors d'un mouvement d'avance V de la première pièce de machine (12) au-dessus de l'une des sections d'extrémité libres (34, 36) de la bague de guidage (24) et lors d'un mouvement de recul de la première pièce de machine (12) au-dessus de l'autre section d'extrémité (34, 36) respective de la bague de guidage (24).

8. Unité piston-cylindre (10) selon la revendication 7, lorsque la revendication 7 dépend de la revendication 3, **caractérisée en ce que** le rétrécissement dynamique (56) du canal de lubrifiant (24) peut être réduit ou désactivé en cours de fonctionnement grâce au lubrifiant s'écoulant à travers le canal de lubrifiant.

9. Unité piston-cylindre (10) selon la revendication 7 ou 8, **caractérisée en ce que** la bague de guidage (24) est agencée par rapport à l'axe de déplacement (L) avec de l'air axial dans la rainure de retenue (26).
